Europäisches Patentamt

**European Patent Office**

**Office européen des brevets**

(19)

(11) **EP 0 776 489 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(21) Anmeldenummer: **96921986.4**

(22) Anmeldetag: **14.06.1996**

(51) Int Cl.$^7$: **G01S 17/46**, G01C 3/10

(86) Internationale Anmeldenummer:
**PCT/EP96/02567**

(87) Internationale Veröffentlichungsnummer:
**WO 97/00455 (03.01.1997 Gazette 1997/02)**

(54) **VERFAHREN UND VORRICHTUNG ZUR BESTIMMUNG DES ABSTANDS ZWISCHEN EINER BASIS UND EINER SPIEGELNDEN OBERFLÄCHE**

PROCESS AND DEVICE FOR DETERMINING THE DISTANCE BETWEEN A BASE AND A REFLECTING SURFACE

PROCEDE ET DISPOSITIF DE DETERMINATION DE LA DISTANCE ENTRE UNE BASE ET UNE SURFACE REFLECHISSANTE

(84) Benannte Vertragsstaaten:
**DE FR**

(30) Priorität: **16.06.1995 DE 19521961**

(43) Veröffentlichungstag der Anmeldung:
**04.06.1997 Patentblatt 1997/23**

(73) Patentinhaber: **Jurca Optoelektronik GmbH & Co. KG**
**63110 Rodgau 1 (DE)**

(72) Erfinder:
 • **JURCA, Marius, Christian**
 **D-63755 Alzenau (DE)**
 • **Christoph Dietz**
 **63170 Obertshausen (DE)**

(74) Vertreter: **Urner, Peter, Dipl.-Phys.**
**TER MEER STEINMEISTER & PARTNER GbR,**
**Patentanwälte,**
**Mauerkircherstrasse 45**
**81679 München (DE)**

(56) Entgegenhaltungen:
**DE-A- 4 026 956         GB-A- 2 176 963**
**US-A- 4 736 247**

 • **PROCEEDINGS OF THE INTERNATIONAL CONFERENCE ON ROBOTICS AND AUTOMAT, NICE, MAY 12 - 14, 1992, Bd. VOL. 1, Nr. CONF. 8, 12.Mai 1992, INSTITUTE OF ELECTRICAL AND ELECTRONICS ENGINEERS, Seiten 593-598, XP000300527 MARSZALEC J A ET AL: "A PHOTOELECTRIC RANGE SCANNER USING AN ARRAY OF LED CHIPS"**

EP 0 776 489 B1

**Beschreibung**

Die Erfindung bezieht sich auf ein Verfahren und eine Vorrichtung zur optischen Entfernungsmessung zu spiegelnden Oberflächen.

Der übliche Triangulationsansatz zur optischen Entfernungsmessung beruht auf einer Messung der Winkelposition eines Streulichtflecks, der durch einen Lichtstrahl (z. B. Laser) auf der zu messenden Oberfläche erzeugt wird. Dieser Ansatz trifft bei hochreflektierenden Oberflächen auf erhebliche Schwierigkeiten, da sie das auftreffende Licht nach dem Reflexionsgesetz nur in eine Richtung reflektieren und nicht oder nur zu einem geringen Teil in Richtung des Empfängers streuen.

Der Erfindung liegt die Aufgabe zugrunde, das oben beschriebene Problem bei der optischen Entfernungsmessung zu spiegelnden Oberflächen zu überwinden und ein Verfahren sowie eine Vorrichtung zu schaffen, um die Entfernung zu spiegelnden Oberflächen kontinuierlich und ohne Justieraufwand ermitteln zu können.

Die verfahrensseitige Lösung findet sich im kennzeichenden Teil des Patentanspruch 1 und die vorrichtungsseitige Lösung im kennzeichnenden Teil des Patentanspruchs 5. Vorteilhafte Weiterbildungen des Verfahrens und der Vorrichtung sind den jeweils nachgeordneten Unteransprüchen zu entnehmen.

Ein Verfahren zur Bestimmung des Abstands h zwischen einer Basis 1 und einer spiegelnden Oberfläche 2 eines Gegenstands 3 zeichnet sich durch folgende Schritte aus:

a) mittels einer auf der Basis 1 befindlichen ersten Lichtquelle 4 wird die spiegelnde Oberfläche 2 divergent beleuchtet;
b) mittels eines auf der Basis 1 liegenden ersten Detektors 5 wird der relativ zur Basis 1 liegende Erscheinungswinkel $\gamma$ des virtuellen Bildes der ersten Lichtquelle 4 durch Detektion der an der spiegelnden Oberfläche 2 reflektierten Strahlung der ersten Lichtquelle 4 gemessen;
c) mittels einer wenigstens annähernd am Ort des ersten Detektors 5 vorhandenen zweiten Lichtquelle 6 wird die spiegelnde Oberfläche 2 divergent bestrahlt;
d) mittels eines wenigstens annähernd am Ort der ersten Lichtquelle 4 liegenden zweiten Detektors 7 wir der relativ zur Basis 1 liegende Erscheinungswinkel $\alpha$ des virtuellen Bildes der zweiten Lichtquelle 6 durch Detektion der an der spiegelnden Oberfläche 2 reflektierten Strahlung der zweiten Lichtquelle 6 gemessen; und
e) Bestimmung des Abstands unter Zuhilfenahme der beiden Erscheinungswinkel $\gamma$, $\alpha$ und der zwischen den Scheitelpunkten C, A beider Erscheinungswinkel $\gamma$, $\alpha$ liegenden Distanz d.

Durch die erfindungsgemäße Vermessung der direkten Reflexion von zwei Lichtquellen mit zwei Detektoren nach dem Reflexionsgesetz und unter der Voraussetzung, daß beide Lichtquellen vom jeweils anders positionierten Detektor aus betrachtet auf demselben Punkt B auf der spiegelnden Oberfläche liegen, lassen sich Entfernungen zu spiegelnden Oberflächen in einfacher Weise ermitteln, ohne daß es erforderlich ist, Lichtquellen oder Detektoren zum Aufsuchen von Reflexionspunkten zu verschieben.

Eine vorteilhafte Weiterbildung des Verfahrens liegt in der Bestimmung des Abstands h nach folgender Gleichung:

$$h = \frac{d}{\frac{1}{\tan \alpha} + \frac{1}{\tan \gamma}}$$

worin sind:

d =    Distanz zwischen den Scheitelpunkten C, A der beiden Erscheinungswinkel $\gamma$, $\alpha$;
$\alpha$ =    Erscheinungswinkel des virtuellen Bildes der zweiten Lichtquelle 6 an der spiegelnden Oberfläche 2 relativ zur Basis 1; und
$\gamma$ =    Erscheinungswinkel des virtuellen Bildes der ersten Lichtquelle 4 an der spiegelnden Oberfläche 2 relativ zur Basis 1.

Der Vorteil der Verwendung dieser Gleichung zur Bestimmung von h liegt in ihrer einfachen und schnellen Anwendbarkeit. Es müssen lediglich die bekannte Größe d sowie die gemessenen Erscheinungswinkel $\gamma$ und $\alpha$ einmal eingesetzt werden, um das gewünschte Ergebnis zu erhalten.

Eine andere vorteilhafte Weiterbildung des Verfahrens liegt in der zusätzlichen Ermittlung eines Versatzes dx eines Reflexionspunktes auf der spiegelnden Oberfläche 2 gegen die Mitte der Distanz d, der wie folgt ermittelt wird:

$$dx = d\, \frac{1}{2} - \frac{1}{1 + \dfrac{\tan\alpha}{\tan\gamma}}$$

worin sind:

d =     Distanz zwischen den Scheitelpunkten C, A der beiden Erscheinungswinkel $\gamma$, $\alpha$;
$\alpha$ =     Erscheinungswinkel des virtuellen Bildes der zweiten Lichtquelle 6 an der spiegelnden Oberfläche 2 relativ zur Basis 1; und
$\gamma$ =     Erscheinungswinkel des virtuellen Bildes der ersten Lichtquelle 4 an der spiegelnden Oberfläche 2 relativ zur Basis 1.

Der Vorteil der Ermittlung von dx liegt darin, daß hierdurch schnell eine eventuell vorhandene Neigung der zu messenden Oberfläche 2 gegenüber der Basis 1 ermittelt werden kann, und in der Möglichkeit festzustellen, an welchen Punkt B exakt die Entfernung zur Basis 1 gemessen wurde.

Eine noch andere vorteilhafte Weiterbildung des Verfahrens liegt darin, daß die beiden Erscheinungswinkel $\gamma$, $\alpha$ in Zeitmultiplex gemessen werden. Das bedeutet, daß sich die beiden einzelnen Messungen nicht durch irgendwelches Streulicht der jeweils anderen Messung beeinflussen.

Eine Vorrichtung zur Bestimmung des Abstands h zwischen einer Basis 1 und einer spiegelnden Oberfläche 2 eines Gegenstands 3 ist durch folgende Merkmale gekennzeichnet:

a) eine auf der Basis 1 angeordnete erste Lichtquelle 4 zur divergenten Bestrahlung der spiegelnden Oberfläche 2;
b) einen auf der Basis 1 angeordneten ersten Detektor 5, der den relativ zur Basis 1 liegenden Erscheinungswinkel $\gamma$ des virtuellen Bildes der ersten Lichtquelle 4 durch Detektion der an der spiegelnden Oberfläche 2 reflektierten Strahlung der ersten Lichtquelle 4 mißt;
c) eine wenigstens annähernd am Ort des ersten Detektors 5 angeordnete zweite Lichtquelle 6 zur divergenten Bestrahlung der spiegelnden Oberfläche 2;
d) einen wenigstens annähernd am Ort der ersten Lichtquelle 4 liegenden zweiten Detektor 7, der den relativ zur Basis 1 liegenden Erscheinungswinkel $\alpha$ des virtuellen Bildes der zweiten Lichtquelle 6 durch Detektion der an der spiegelnden Oberfläche 2 reflektierten Strahlung der zweiten Lichtquelle 6 mißt; und
e) eine wenigstens mit den Detektoren 5, 7 verbundene elektronische Recheneinrichtung zur Berechnung des Abstands h unter Berücksichtigung der beiden gemessenen Erscheinungswinkel $\gamma$, $\alpha$ und der zwischen den Scheitelpunkten C, A beider Erscheinungswinkel $\gamma$, $\alpha$ liegenden Distanz d.

Der Vorteil dieser Ausführung liegt darin, daß durch die Anordnung jeweils einer Lichtquelle wenigstens annähernd am Ort jeweils eines Detektors der Strahlengang zur Messung des ersten Erscheinungswinkels einer virtuellen Abbildung der ersten Lichtquelle auf der spiegelnden Oberfläche identisch oder nahezu identisch mit dem zur Messung des zweiten Erscheinungswinkels einer virtuellen Abbildung der zweiten Lichtquelle auf der spiegelnden Oberfläche 2 ist, so daß der Abstand h der Basis 1 zur spiegelnden Oberfläche ermittelt werden kann.

Eine bevorzugte Aufführung der Vorrichtung liegt darin, daß die erste Lichtquelle 4 und der zweite Detektor 7 einerseits sowie die zweite Lichtquelle 6 und der erste Detektor 5 andererseits auf jeweils unterschiedlichen Seiten eines halbdurchlässigen Spiegels 9, 8 liegen.

Der Vorteil dieser bevorzugten Ausführung liegt darin, daß es mit Hilfe zweier halbdurchlässiger Spiegel 8, 9, die sich jeweils im Strahlengang von einer Lichtquelle über die spiegelnde Oberfläche zu einem Detektor hin befinden, möglich ist, die beiden Strahlengänge, von denen jeweils einer von einer der beiden Lichtquellen ausgeht, übereinander zu legen, ohne daß sich jeweils eine Lichtquelle und ein Detektor denselben Ort teilen müssen.

Eine weitere bevorzugte Ausführung der Vorrichtung liegt darin, daß die Lichtquellen 4, 6 und die Detektoren 5, 7 auf der Basis 1 liegen.

Der Vorteil dieser weiteren bevorzugten Ausführung der Vorrichtung liegt in einer einfachen und kostensparenden Konstruktion bei nicht wesentlich eingeschränktem Anwendungs- und Genauigkeitsbereich.

Eine noch andere bevorzugte Ausführung der Vorrichtung liegt darin, daß die Lichtquellen 4, 6 Leuchtdioden oder nichtkollimierte Laser sind.

Der Vorteil der Verwendung von Leuchtdioden liegt darin, daß eine kostengünstige Auswahl getroffen werden kann, während sich durch nichtkollimierte Laser eine sehr hohe Leuchtdichte erzeugen läßt, die auch bei leicht verschmutzter spiegelnder Oberfläche noch eine genaue Abstandsbestimmung ermöglicht.

Eine noch weitere bevorzugte Ausführung der Vorrichtung liegt darin, daß jeder Detektor einen CCD-Sensor 10, 11 oder PSD-Sensor 10, 11 sowie ein Objektiv 12, 13 enthält, das das virtuelle Bild der Lichtquelle 4, 6 auf den Sensor abbildet.

Ein Vorteil dieser noch weiteren bevorzugten Ausführung der Vorrichtung liegt darin, daß preiswerte Sensoren zum Einsatz kommen können und ein starrerAufbau besteht, der eine ohne Justierung erfolgende schnelle Meßwertaufnahme unterstützt. Infolge der Ortsauflösung des Sensors läßt sich durch die Lage des Fokus der auf ihm abgebildeten Strahlung unmittelbar der jeweilige Erscheinungswinkel ablesen.

Eine sehr vorteilhafte Weiterbildung der Vorrichtung besteht darin, daß die elektronische Recheneinrichtung auch mit den Lichtquellen 4, 6 verbunden ist sowie einen Multiplexer und eine analoge Dunkelwertklemmung 14 enthält, um die Erscheinungswinkel $\gamma$, $\alpha$ im Zeitmultiplex zu messen.

Der Vorteil dieser Weiterbildung liegt darin, daß die beiden Messungen besser getrennt werden können und die Möglichkeit besteht, Unsymmetrien der nachfolgenden Hauptverstärker und Analog/Digital-Konverter 15, 16 durch Vertauschen der Ausgänge Y1 und Y2 des Multiplexers und analoger Dunkelwertklemmung 14 auszugleichen. Weiterhin ist es durch das Multiplexen möglich, für die Signalverarbeitung der Detektorausgangssignale dieselben Analog/Digital-Konverter 15, 16 zur Wandlung der Ausgangssignale beider Sensoren 10, 11 einzusetzen und so die gleichen Bedingungen für beide Signalwege herzustellen. Ferner können der Multiplexer und analoge Dunkelwertklemmung 14 die Signalwerte der Sensoren 10, 11 während der Dunkelphase der Lichtquellen 4, 6 speichern und dann während der Hellphase von den neuen Signalwerten abziehen, um den Umgebungslichtanteil zu entfernen.

Die Erfindung wird nachfolgend unter Bezugnahme auf die Zeichnung näher beschrieben. Es zeigen:

**Figur 1** eine erste Abstandsmeßvorrichtung sowie eine parallel zur Basis 1 liegende zu messende spiegelnde Oberfläche 2;

**Figur 2** die erste Abstandsmeßvorrichtung sowie eine schräg zur Basis 1 liegende zu messende spiegelnde Oberfläche 2;

**Figur 3** eine zweite Abstandsmeßvorrichtung sowie eine parallel zu ihrer Basis 1 liegende zu messende spiegelnde Oberfläche 2;

**Figur 4** die erste Abstandsmeßvorrichtung, oberhalb der zwei Positionen der spiegelnden Oberfläche eingezeichnet sind; und

**Figur 5** ein Blockschaltbild für den elektronischen Teil der Abstandsmeßvorrichtungen.

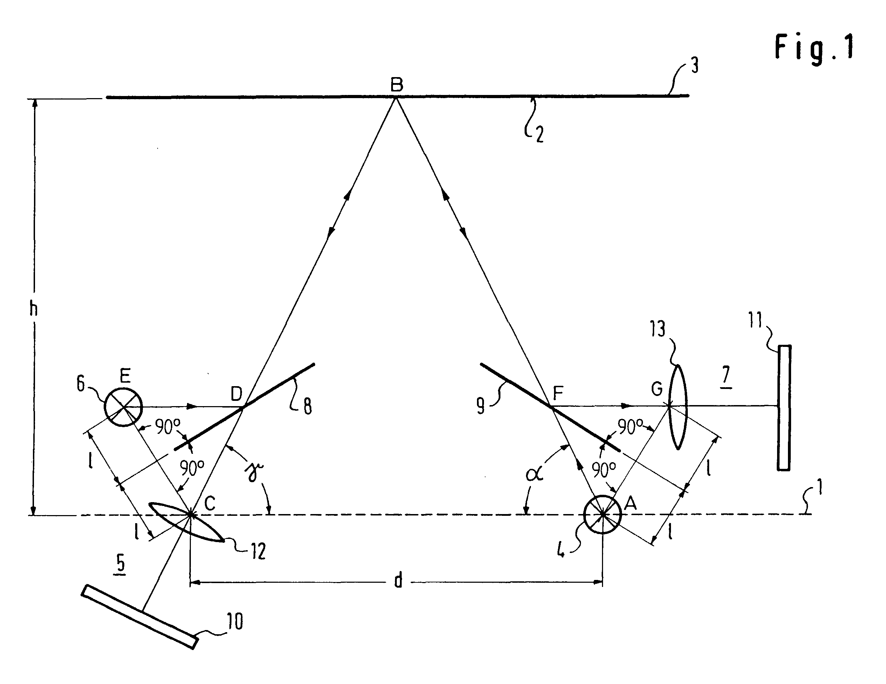

Die Figur 1 zeigt eine erste Abstandsmeßvorrichtung nach der Efindung. Ihr Aufbau wird nachfolgend im einzelnen beschrieben.

Eine erste Lichtquelle 4, die am Punkt A auf einer Basis 1 angeordnet ist, strahlt einen Lichtkegel auf die zu messende spiegelnde Oberfläche 2. In einer gewissen Distanz d zur Lichtquelle 4 befindet sich auf der Basis 1 am Punkt C ein Detektor 5 zur Messung des Erscheinungswinkel $\gamma$ des virtuellen Bildes der ersten Lichtquelle 4 im Punkt B. Das virtuelle Bild der ersten Lichtquelle 4 entsteht durch direkte Reflexion eines Strahls der ersten Lichtquelle 4 von A im Punkt B nach Punkt C. Der beschriebene Strahlengang passiert an den Punkten D und F zwei halbdurchlässigen Spiegel 8, 9, die außer einem leichten Parallelversatz keinen Einfluß auf die Strahlgeometrie haben. Die Korrektur dieses Versatzes erfolgt über eine Korrektur der Distanz d. Am Punkt E, der durch Spiegelung an dem ersten halbdurchlässigen Spiegel 8 aus Punkt C hervorgeht, befindet sich eine zweite Lichtquelle 6, die über den ersten halbdurchlässigen Spiegel 8 die zu messende spiegelnde Oberfläche 2 beleuchtet. Ein zweiter Detektor 7 in Punkt G, der durch Spiegelung am zweiten halbdurchlässigen Spiegel 9 aus Punkt A hervorgeht, mißt den Erscheinungswinkel $\alpha$ des virtuellen Bildes der zweiten Lichtquelle 6. Der Weg der beiden Strahlengänge ist wegen der Spiegelsymmetrie von C und E bzw. A und G zwischen den Punkten D, B und F identisch. Somit ist das Dreieck ABC vollständig bestimmt, derAbstand h der Basis 1 zur spiegelnden Oberfläche 2 ergibt sich dann zu:

$$h = \frac{d}{\frac{1}{\tan \alpha} + \frac{1}{\tan \gamma}}$$

und der Versatz dx des Reflexionspunktes B gegen die Mitte der Distanz d zwischen den Scheitelpunkten C, A der beiden Erscheinungswinkel $\gamma$, $\alpha$ ergibt sich zu;

$$dx = d \cdot \left[ \frac{1}{2} - \frac{1}{1 + \dfrac{\tan \alpha}{\tan \gamma}} \right]$$

mit

$\alpha$ =     Erscheinungswinkel des virtuellen Bildes der zweiten Lichtquelle 6 an der spiegelnden Oberfläche 2 relativ zur Basis 1, und

$\gamma$ =     Erscheinungswinkel des virtuellen Bildes der ersten Lichtquelle 4 an der spiegelnden Oberfläche 2 relativ zur Basis 1.

Durch diesen Meßaufbau wird erreicht, daß die Entfernung h zwischen einer Basis 1 und einer spiegelnder Oberfläche 2 bei einer in gewissen Bereichen beliebigen Lage der spiegelnden Oberfläche 2 ohne Justierung des Meßaufbaus erfaßt werden kann. Es wird weiterhin durch die Bestimmung von dx erreicht, daß die genaue Position der spiegelnden Oberfläche 2 relativ zur Basis 1 bestimmt werden kann. So ist es möglich, die Position und Lage der spiegelnden Oberfläche 2 zur Basis 1 zu ermitteln.

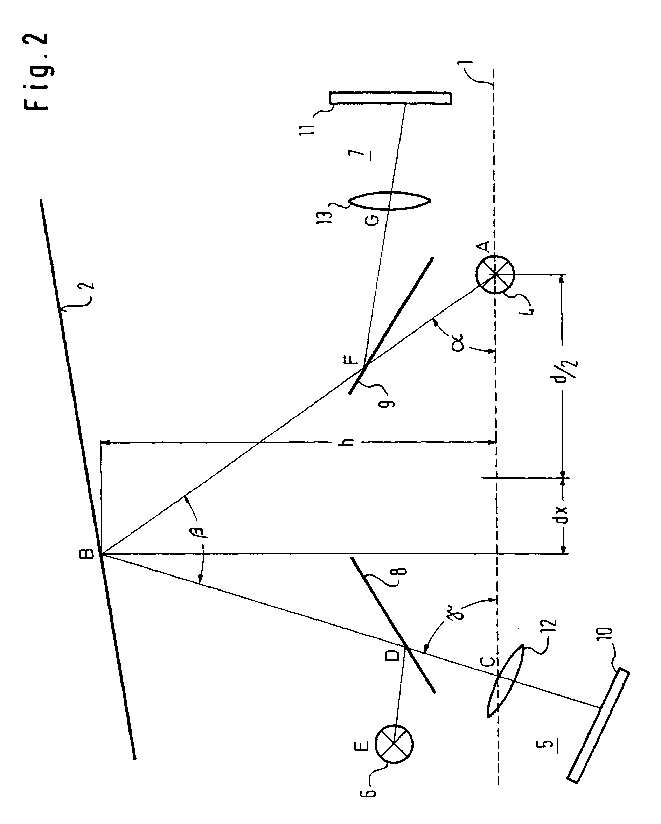

Die Figur 2 zeigt die Ausführung nach Figur 1, jedoch jetzt mit schräg zur Basis liegender spiegelnder Oberfläche.

Das Meßprinzip ist identisch mit demjenigen für Figur 1. Es läßt sich erkennen, daß sich bei gleicher Anordnung des Meßaufbaus und schräg zur Basis 1 liegender Oberfläche 2 ein Versatz dx zur Mitte der Distanz d zwischen den beiden Scheitelpunkten C, A der Erscheinungswinkel $\gamma$, $\alpha$ bildet. Über diesen Versatz kann die genaue Lage des Punktes B angegeben werden, in dem sich die beiden virtuellen Bilder der Lichtquellen 4, 6, von den dazugehörigen Detektoren 5, 7 aus gesehen, befinden. Damit kann die genaue Position und Ausrichtung der spiegelnden Oberfläche 2 zur Basis 1 ohne Justierung des Meßaufbaus bestimmt werden.

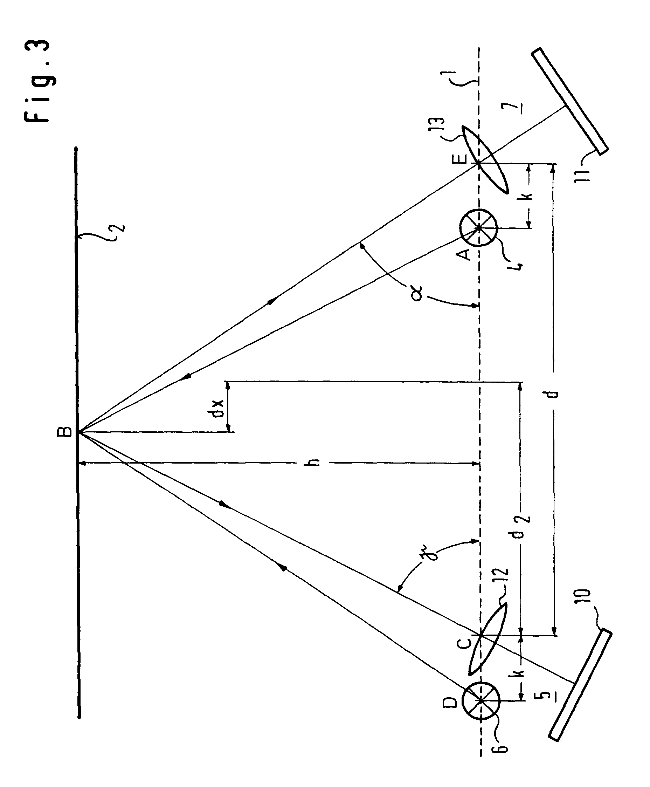

Die Figur 3 zeigt eine zweite Abstandsmeßvorrichtung nach der Erfindung. Hier liegt die spiegelnde Oberfläche parallel zur Basis.

Die zweite Abstandsmeßvorrichtung hat eine vereinfachte Sensorgeometrie. Hier entfallen die beiden halbdurchlässigen Spiegel 8, 9 und sowohl die Lichtquellen 4, 6 als auch die Detektoren 5, 7 sind auf der Basis 1 angeordnet. Die Abstände k der ersten Lichtquelle 4 und des zweiten Detektors 7 sowie der zweiten Lichtquelle 6 und des ersten Detektors 5 müssen gleich und möglichst klein sein. Die Strahlengänge von der ersten Lichtquelle 4 zum ersten Detektor 5 und von der zweiten Lichtquelle 6 zum zweiten Detektor 7 werden nur dann im gemeinsamen Punkt B reflektiert, wenn die zu messende spiegelnde Oberfläche 2 parallel zur Basis 1 liegt. Das Dreieck, das sich aus den beiden Scheitelpunkten E, C der Erscheinungswinkel $\alpha$, $\gamma$ der virtuellen Bilder der beiden Lichtquellen 6, 4 und dem Punkt B, in dem die beiden Strahlengänge reflektiert werden, ergibt, ist dann vollständig bestimmt und es können wie oben der Abstand h und der Versatz dx ermittelt werden.

Beim kleinem Abstand k der Lichtquellen 4, 6 von den Detektoren 7, 5 und kleinen Winkeln der zu messenden Oberfläche 2 gilt dies aber näherungsweise auch noch. Es ergeben sich dann zwei Reflexionspunkte, die sehr nahe beieinander liegen. Auf jeden Fall aber können die Werte für den Abstand h und den Versatz dx über Korrekturfunktionen (z. B. in Tabellenform) exakt bestimmt werden.

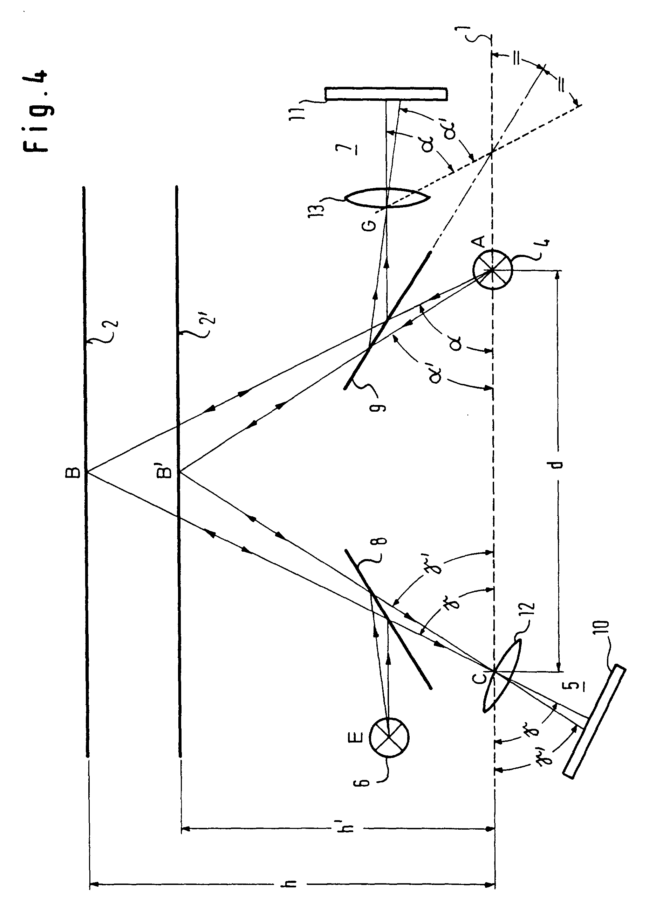

Die Figur 4 zeigt nochmals die erste Abstandsmeßvorrichtung bei zwei verschiedenen Entfernungen der spiegelnden Oberfläche.

Das Meßprinzip ist identisch mit dem für Figur 1 beschriebenen. Es kann erkannt werden, wie sich für unterschiedliche Abstände h, h' unterschiedliche Erscheinungswinkel $\gamma$, $\gamma'$, $\alpha$, $\alpha'$ der virtuellen Bilder der Lichtquellen 4, 6 ergeben.

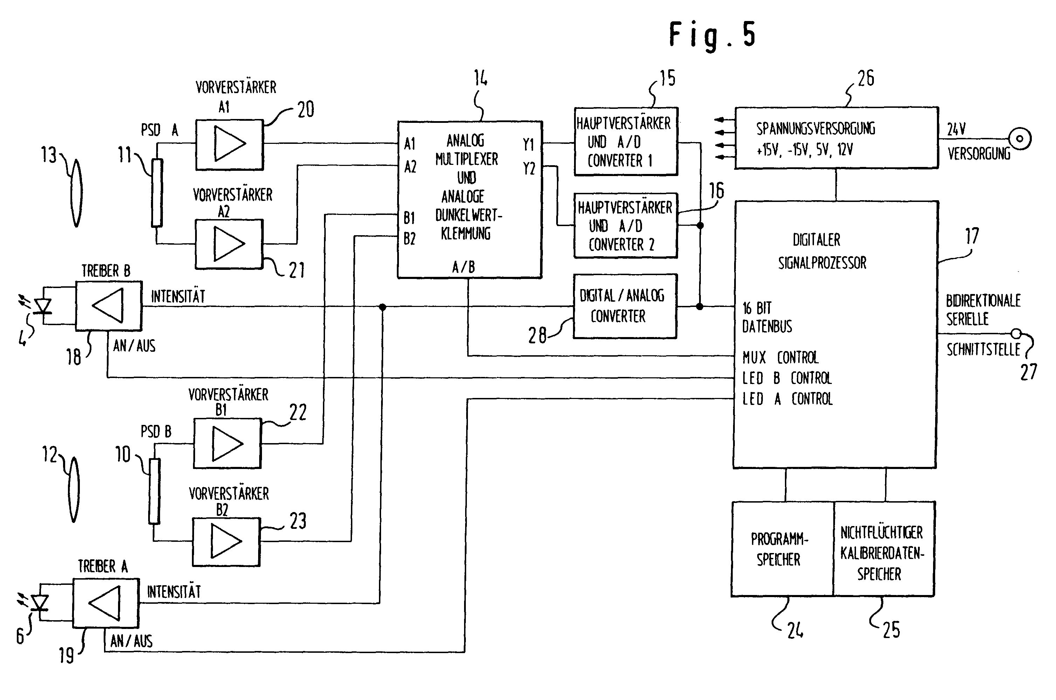

Die Figur 5 zeigt ein Blockschaltbild einer zu den Abstandsmeßvorrichtungen gehörenden Elektronik.

Als Lichtquellen 4, 6 dienen IR-Leuchtdioden, die durch den steuernden Signalprozessor 17 ein- und ausgeschaltet sowie in ihrer Strahlungsintensität geregelt werden können. Diese Leuchtdioden 4, 6 werden in beiden Kanälen A und B von identisch aufgebauten Leistungstreibern 18, 19 angesteuert. Die Richtcharakteristik der Leuchtdioden 4, 6 ist keulenförmig mit einen Öffnungswinkel von etwa 30°. Die Dioden 4, 6 sind so ausgerichtet, daß die Reflexion des Intensitätsmaximums in das gegenüberliegende Objektiv 12, 13 fällt, wenn sich die zu messende spiegelnde Oberfläche 2 in der Meßbereichsmitte befindet und parallel zur Basis 1 steht. Die Leistungsteiler 18, 19 werden von dem Prozessor 17 über einen Digital/Analogwandler 28 angesteuert.

Die von den beiden PSD's 10, 11 gelieferten vier Ausgangssignale A1, A2, B1, B2 werden in vier gleichen Transimpedanzvorverstärkern 20, 21, 22, 23 verstärkt. Im nachfolgenden Analogmultiplexer und der analogen Dunkelwertklemmung 14 wird zunächst der Umgebungslichtanteil aus den Signalen entfernt, indem der Signalwert während der Dunkelphase der Leuchtdioden 4, 6 gespeichert und dann von den Signalen abgezogen wird (Klemmung). Dann werden, je nach Meßphase, die Signale A1, A2 oder B1, B2 auf die Ausgänge Y1, Y2 durchgeschaltet. Außerdem besteht die Möglichkeit, Y1 und Y2 zu vertauschen, um Unsymmetrien der nachfolgenden Verstärker und A/D-Konverter 15, 16 ausmitteln zu können. Die in den A/D-Konvertern 15, 16 enthaltenen Hauptverstärker haben zusätzlich eine bandbegrenzende Funktion (Tiefpaß). Die A/D-Wandlung selbst wird mit 12 Bit Auflösung durchgeführt. Zusätzlich umfaßt die bevorzugte Ausführung einen (FLASHPROM-) Programmspeicher 24, einen EEPROM-Kalibrierdatenspeicher 25 und einen galvanisch trennenden DC-DC Konverter 26 zur Erzeugung der verschiedenen internen Betriebsspannungen.

Ein Meßzyklus läuft folgendermaßen ab:

Zu Beginn einer 15 μsec dauernden Dunkelphase (Lichtquelle 4, 6 aus) wird der Signalpegel aller vier Meßkanäle auf 0 Volt geklemmt (Umgebungslichtsubtraktion). Am Ende dieser Dunkelphase werden die Signalwerte der Kanäle A1, A2 A/D-gewandelt und im Prozessor 17 gespeichert. Dann wird die zweite Lichtquelle 6 mit einer aus den zurückliegenden Zyklen bestimmten Intensität eingeschaltet.

Nach einer Einschwingzeit von 15 μsec werden wiederum die Kanäle A1/A2 A/D-gewandelt. Die Differenz zwischen diesen "Hell-" und den vorher gemessen "Dunkel-"Werten wird im folgenden als "Kanal"-Meßwert weiterverarbeitet. Dann wird die zweite Lichtquelle 6 wieder ausgeschaltet und der Analogmultiplexer 14 wird auf die Kanäle B1, B2 umgeschaltet. Es erfolgt wieder die gleiche "Dunkel-" und "Hell-"Messung, wie oben, für die B-Kanäle.

Die Abfolge (A-Messung, B-Messung) wird mit getauschten Ausgängen Y1 und Y2 wiederholt und die erhaltenen Kanalmeßwerte A1, A2, B1, B2 werden ermittelt.

Nach der Formel (A1 - A2)/(A1 + A2) bzw. (B1 - B2)/(B1 + B2) werden danach die Positionen der abgebildeten Lichtflecken auf den Sensoren 10, 11 ermittelt (normiert auf ±1). Außerdem wird die empfangene Signalstärke (A1 + A2 bzw. B1 + B2) beurteilt und anhand dieser die Intensität der Lichtquellen 4, 6 nachgeführt, um in der obigen Formel einen möglichst großen Nenner (Genauigkeit) ohne die Gefahr einer Übersteuerung (Sättigung) zu erhalten.

Über zwei im EEPROM 25 abgelegte Kalibriertabellen und damit durchgeführte Interpolationen werden den Erscheinungswinkeln γ, α die benötigten Werte tan γ und tan α zur Bestimmung des Abstands h und des Versatzes dx zugeordnet. Im folgenden werden Abstands- und Winkeldaten berechnet. Diese können dann über eine wählbare Anzahl von Meßzyklen gemittelt werden.

Zur Feinkorrektur besteht noch die Möglichkeit, über eine zweidimensionale (Winkel, Abstand) Korrekturtabelle bestehende Restungenauigkeiten herauszukalibrieren.

Die so erhaltenen Meßwerte werden über eine RS 232-Schnittstelle 27 aus dem Gerät ausgegeben.

## Patentansprüche

1. Verfahren zur Bestimmung des Abstands (h) zwischen einer Basis( 1) und einer spiegelnden Oberfläche (2) eines Gegenstands (3), mit folgenden Schritten:

    a) mittels einer auf der Basis (1) befindlichen ersten Lichtquelle (4) wird die spiegelnde Oberfläche (2) divergent bestrahlt;
    b) mittels eines auf der Basis (1) liegenden ersten Detektors (5) wird der relativ zur Basis (1) liegende Erscheinungswinkel (γ) des virtuellen Bildes der ersten Lichtquelle (4) durch Detektion der an der spiegelnden Oberfläche (2) reflektierten Strahlung der ersten Lichtquelle (4) gemessen;
    c) mittels einer wenigstens annähernd am Ort des ersten Detektors (5) vorhandenen zweiten Lichtquelle (6) wird die spiegelnde Oberfläche (2) divergent bestrahlt;
    d) mittels eines wenigstens annähernd am Ort der ersten Lichtquelle (4) liegenden zweiten Detektors (7) wird der relativ zur Basis (1) liegende Erscheinungswinkel (α) des virtuellen Bildes der zweiten Lichtquelle (6) durch Detektion der an der spiegelnden Oberfläche reflektierten Strahlung der zweiten Lichtquelle (6) gemessen; und
    e) Bestimmung des Abstands unter Zuhilfenahme der beiden gemessenen Erscheinungswinkel (γ, α) und der zwischen den Scheitelpunkten beider Erscheinungswinkel (γ, α) liegenden Distanz (d).

2. Verfahren nach Anspruch 1, **dadurch gekennzeichnet, daß** der Abstand (h) nach folgender Gleichung bestimmt wird:

$$h = \frac{d}{\dfrac{1}{\tan \alpha} + \dfrac{1}{\tan \gamma}}$$

worin sind:

d = Distanz zwischen den Scheitelpunkten (C, A) der beiden Erscheinungswinkel ($\gamma$, $\alpha$);
$\alpha$ = Erscheinungswinkel des virtuellen Bildes der zweiten Lichtquelle (6) an der spiegelnden Oberfläche (2) relativ zur Basis (1); und
$\gamma$ = Erscheinungswinkel des virtuellen Bildes der ersten Lichtquelle (4) an der spiegelnden Oberfläche (2) relativ zur Basis (1).

3. Verfahren nach Anspruch 2, **dadurch gekennzeichnet, daß** zusätzlich ein Versatz (dx) eines Reflexionspunktes auf der spiegelnden Oberfläche (2) gegen die Mitte der Distanz (d) wie folgt ermittelt wird:

$$dx = d \left[ \frac{1}{2} - \frac{1}{1 + \dfrac{\tan \alpha}{\tan \gamma}} \right]$$

worin sind:

d = Distanz zwischen den Scheitelpunkten (C, A) der beiden Erscheinungswinkel ($\gamma$, $\alpha$);
$\alpha$ = Erscheinungswinkel des virtuellen Bildes der zweiten Lichtquelle (6) an der spiegelnden Oberfläche (2) relativ zur Basis (1); und
$\gamma$ = Erscheinungswinkel des virtuellen Bildes der ersten Lichtquelle (4) an der spiegelnden Oberfläche (2) relativ zur Basis (1).

4. Verfahren nach einem der Ansprüche 1 bis 3, **dadurch gekennzeichnet, daß** die beiden Erscheinungswinkel ($\gamma$, $\alpha$) in Zeitmultiplex gemessen werden.

5. Vorrichtung zur Bestimmung des Abstands (h) zwischen einer Basis (1) und einer spiegelnden Oberfläche (2) eines Gegenstands (3), **gekennzeichnet durch:**

   a) eine auf der Basis (1) angeordnete erste Lichtquelle (4) zur divergenten Bestrahlung der spiegelnden Oberfläche (2);
   b) einen auf der Basis (1) angeordneten ersten Detektor (5), der den relativ zur Basis (1) liegenden Erscheinungswinkel ($\gamma$) des virtuellen Bildes der ersten Lichtquelle (4) **durch** Detektion der an der spiegelnden Oberfläche (2) reflektierten Strahlung der ersten Lichtquelle (4) mißt;
   c) eine wenigstens annähernd am Ort des ersten Detektors (5) angeordnete zweite Lichtquelle (6) zur divergenten Bestrahlung der spiegelnden Oberfläche (2);
   d) einen wenigstens annähernd am Ort der ersten Lichtquelle (4) liegenden zweiten Detektor (7), der den relativ zur Basis (1) liegenden Erscheinungswinkel ($\alpha$) des virtuellen Bildes der zweiten Lichtquelle (6) **durch** Detektion der an der spiegelnden Oberfläche (2) reflektierten Strahlung der zweiten Lichtquelle (6) mißt; und
   e) eine wenigstens mit den Detektoren (5, 7) verbundene elektronische Recheneinrichtung zur Berechnung des Abstands (h) unter Berücksichtigung der beiden gemessenen Erscheinungswinkel ($\gamma$, $\alpha$) und der zwischen den Scheitelpunkten beider Erscheinungswinkel ($\gamma$, $\alpha$) liegenden Distanz (d).

6. Vorrichtung nach Anspruch 5, **dadurch gekennzeichnet, daß** die erste Lichtquelle (4) und der zweite Detektor (7) einerseits sowie die zweite Lichtquelle (6) und der erste Detektor (5) andererseits auf jeweils unterschiedlichen Seiten eines halbdurchlässigen Spiegels (9, 8) liegen.

7. Vorrichtung nach Anspruch 5, **dadurch gekennzeichnet, daß** die Lichtquellen (4, 6) und die Detektoren (5, 7) auf der Basis (1) liegen.

8. Vorrichtung nach einem der Ansprüche 5 bis 7, **dadurch gekennzeichnet, daß** die Lichtquellen (4, 6) Leuchtdioden oder nichtkollimierte Laser sind.

9. Vorrichtung nach einem der Ansprüche 5 bis 8, **dadurch gekennzeichnet, daß** jeder Detektor einen CCD-Sensor (10, 11) oder PSD-Sensor (10, 11) sowie ein Objektiv (12, 13) enthält, das das virtuelle Bild der Lichtquelle (4, 6) auf den Sensor abbildet.

10. Vorrichtung nach einem der Ansprüche 5 bis 9, **dadurch gekennzeichnet, daß** die elektronische Recheneinrichtung auch mit den Lichtquellen (4, 6) verbunden ist und einen Multiplexer (14) enthält, um die Erscheinungswinkel ($\gamma$, $\alpha$) in Zeitmultiplex zu messen.

## Claims

1. Method for determining the distance (h) between a base (1) and a specular surface (2) of an object (3), having the following steps:

   a) by means of a first light source (4), located on the base (1), the specular surface (2) is divergently irradiated;
   b) by means of a first detector (5), situated on the base (1), the angle of appearance ($\gamma$), relative to the base (1), of the virtual image of the first light source (4) is measured by detection of the radiation of the first light source (4) reflected at the specular surface (2);
   c) by means of a second light source (6), provided at least approximately at the location of the first detector (5), the specular surface 2 is divergently irradiated;
   d) by means of a second detector (7), situated at least approximately at the location of the first light source (4), the angle of appearance ($\alpha$), relative to the base (1), of the virtual image of the second light source (6) is measured by detection of the radiation of the second light source (6) reflected at the specular surface; and
   e) determination of the distance with the aid of the two measured angles of appearance ($\gamma$, $\alpha$) and the distance (d) between the apexes of the two angles of appearance ($\gamma$, $\alpha$).

2. Method according to Claim 1, **characterized in that** the distance (h) is determined in accordance with the following equation:

$$h = \frac{d}{\dfrac{1}{\tan \alpha} + \dfrac{1}{\tan \gamma}}$$

where:

d = distance between the apexes (C, A) 'of the two angles of appearance ($\gamma$, $\alpha$);
$\alpha$ = angle of appearance of the virtual image of the second light source (6) at the specular surface (2) relative to the base (1); and
$\gamma$ = angle of appearance of the virtual image of the first light source (4) at the specular surface (2) relative to the base (1).

3. Method according to Claim 2, **characterized in that**, in addition, a shift (dx) of a point of reflection on the specular surface (2) towards the centre of the distance (d) is determined as follows:

$$dx = d \left[ \frac{1}{2} - \frac{1}{1 + \dfrac{\tan \alpha}{\tan \gamma}} \right]$$

where:

d = distance between the apexes (C, A) of the two angles of appearance ($\gamma$, $\alpha$);

$\alpha$ = angle of appearance of the virtual image of the second light source (6) at the specular surface (2) relative to the base (1); and

$\gamma$ = angle of appearance of the virtual image of the first light source (4) at the specular surface (2) relative to the base (1).

4. Method according to one of Claims 1 to 3, **characterized in that** the two angles of appearance ($\gamma$, $\alpha$) are measured by time-division multiplexing.

5. Apparatus for determining the distance (h) between a base (1) and a specular surface (2) of an object (3), **characterized by**:

a) a first light source (4), arranged on the base (1), for the divergent irradiation of the specular surface (2) ;
b) a first detector (5), which is arranged on the base (1) and measures the angle of appearance ($\gamma$), relative to the base (1), of the virtual image of the first light source (4) by detection of the radiation of the first light source (4) reflected at the specular surface (2);
c) a second light source (6), arranged at least approximately at the location of the first detector (5), for the divergent irradiation of the specular surface (2);
d) a second detector (7), which is situated at least approximately at the location of the first light source (4) and measures the angle of appearance ($\alpha$), relative to the base (1), of the virtual image of the second light source (6) by detection of the radiation of the second light source (6) reflected at the specular surface (2); and
e) an electronic computing device, connected at least to the detectors (5, 6), for calculating the distance (h) taking into account the two measured angles of appearance ($\gamma$, $\alpha$) and the distance (d) between the apexes of the two angles of appearance ($\gamma$, $\alpha$).

6. Apparatus according to Claim 5, **characterized in that** the first light source (4) and the second detector (7) on the one hand and the second light source (6) and the first detector (5) on the other hand are situated on in each case different sides of a semi-transparent mirror (9, 8).

7. Apparatus according to Claim 5, **characterized in that** the light sources (4, 6) and the detectors (5, 7) are situated on the base (1).

8. Apparatus according to one of Claims 5 to 7, **characterized in that** the light sources (4, 6) are light-emitting diodes or non-collimated lasers.

9. Apparatus according to one of Claims 5 to 8, **characterized in that** each detector includes a CCD sensor (10, 11) or PSD sensor (10, 11) and also a lens (12, 13), which projects the virtual image of the light source (4, 6) onto the sensor.

10. Apparatus according to one of Claims 5 to 9, **characterized in that** the electronic computing device is also connected to the light sources (4, 6) and includes a multiplexer (14), in order to measure the angles of appearance ($\gamma$, $\alpha$) by time-division multiplexing.

**Revendications**

1. Procédé pour déterminer la distance (h) entre une base (1) et une surface réfléchissante (2) d'un objet, comprenant les étapes suivantes:

a) la surface réfléchissante (4) est éclairée par divergence au moyen d'une première source lumineuse (4) se trouvant sur la base (1) :
b) au moyen d'un premier détecteur (5) situé sur la base (1), l'angle d'apparition ($\gamma$) par rapport à la base (1) de l'image virtuelle de la première source lumineuse (4) est mesuré par détection du rayonnement de la première source lumineuse (4) qui est réfléchi sur la surface réfléchissante (2).
c) la surface réfléchissante (2) est éclairée par divergence au moyen d'une deuxième source lumineuse (6) présente au moins approximativement à l'emplacement du premier détecteur (5);
d) au moyen d'un deuxième détecteur (7) situé au moins approximativement à l'emplacement de la première source lumineuse (4), l'angle d'apparition ($\alpha$) par rapport à la base (1) de l'image virtuelle de la deuxième source lumineuse (6) est mesuré par détection du rayonnement de la deuxième source lumineuse (6) qui est réfléchi sur la surface réfléchissante : et

e) détermination de la distance à l'aide des deux angles d'apparition ($\gamma$, $\alpha$) et de la distance (d) entre les sommets des deux angles d'apparition ($\gamma$, $\alpha$).

2. Procédé selon la revendication 1, **caractérisé en ce que** la distance (h) est calculée selon l'équation suivante :

$$h = \frac{d}{\dfrac{1}{\tan \alpha} + \dfrac{1}{\tan \gamma}}$$

Signification des lettres et symboles :

d = distance entre les sommets (C, A) des deux angles d'apparition ($\gamma$, $\alpha$)

$\alpha$ = angle d'apparition de l'image virtuelle de la deuxième source lumineuse (6) sur la surface réfléchissante (2) par rapport à la base (1) et

$\gamma$ = angle d'apparition de l'image virtuelle de la première source lumineuse (4) sur la surface réfléchissante (2) par rapport à la base (1).

3. Procédé selon la revendication 2, **caractérisé en ce qu'**en supplément un déport (dx) d'un point de réflexion sur la surface réfléchissante (2) vers le centre de la distance (d) est calculé de la façon suivante :

$$dx = d \left[ \frac{1}{2} - \frac{1}{1 + \dfrac{\tan \alpha}{\tan \gamma}} \right]$$

Signification des lettres et symboles :

d = distance entre les sommets (C, A) des deux angles d'apparition ($\gamma$, $\alpha$)

$\alpha$ = angle d'apparition de l'image virtuelle de la deuxième source lumineuse (6) sur la surface réfléchissante (2) par rapport à la base (1) ; et

$\gamma$ = angle d'apparition de l'image virtuelle de la première source lumineuse (4) sur la surface réfléchissante (2) par rapport à la base (1).

4. Procédé selon l'une quelconque des revendications 1 à 3, **caractérisé en ce que** les deux angles d'apparition ($\gamma$, $\alpha$) sont mesurés dans le cadre du multiplexage temporel.

5. Dispositif pour déterminer la distance (h) entre une base (1) et une surface (2) réfléchissante d'un objet, **caractérisé par** :

a) une première source lumineuse (4), disposée sur la base (1), pour l'éclairage divergent de la surface réfléchissante (2) ;

b) un premier détecteur (5) situé sur la base (1), qui mesure l'angle d'apparition ($\gamma$) par rapport à la base (1) de l'image virtuelle de la première source lumineuse (4) par détection du rayonnement de la première source lumineuse (4) qui est réfléchi sur la surface réfléchissante (2) ;

c) une deuxième source lumineuse (6) disposée au moins approximativement à l'emplacement du premier détecteur (5) pour l'éclairage divergent de la surface réfléchissante (2)

d) un deuxième détecteur (7) situé au moins approximativement à l'emplacement de la première source lumineuse (4), qui mesure l'angle d'apparition ($\alpha$) par rapport à la base (1) de l'image virtuelle de la deuxième source lumineuse (6) par détection du rayonnement de la deuxième source lumineuse (6) qui est réfléchi sur la surface réfléchissante (2), et

e) un dispositif de calcul électronique relié au moins aux détecteurs (5, 7) pour le calcul de la distance (h) compte tenu des deux angles d'apparition ($\gamma$, $\alpha$) mesurés et de la distance (d) entre les sommets des deux angles d'apparition ($\gamma$, $\alpha$)

6. Dispositif selon la revendication 5, **caractérisé en ce que** la première source lumineuse (4) et le deuxième détecteur (7) d'une part ainsi que la deuxième source lumineuse (6) et le premier détecteur (5) d'autre part sont disposés sur des côtés respectivement différents d'un miroir (9, 8) semi-réfléchissant.

7. Dispositif selon la revendication 5, **caractérisé en ce que** les sources lumineuses (4, 6) et les détecteurs (5, 7) sont disposés sur la base (1).

8. Dispositif selon l'une quelconque des revendications 5 à 7, **caractérisé en ce que** les sources lumineuses (4, 6) sont des diodes électroluminescentes ou des lasers non collimatés.

9. Dispositif selon l'une quelconque des revendications 5 à 8, **caractérisé en ce que** chaque détecteur contient un capteur CCD (10, 11) ou un capteur PSD (10, 11) et un objectif (12, 13) qui reproduit l'image virtuelle de la source lumineuse (4, 6) sur le capteur.

10. Dispositif selon l'une quelconque des revendications 5 à 9, **caractérisé en ce que** le dispositif de calcul électronique est relié également aux sources lumineuses (4, 6) et contient un multiplexeur (14) pour mesurer les angles d'apparition ($\gamma$, $\alpha$) en multiplexage temporel.

Fig.1

EP 0 776 489 B1

12

Fig. 2

Fig.3

EP 0 776 489 B1

Fig.4

EP 0 776 489 B1

Fig. 5